(19) Europäisches Patentamt

European Patent Office

Office européen des brevets

(11) **EP 3 614 466 B1**

(12) **EUROPEAN PATENT SPECIFICATION**

(45) Date of publication and mention
of the grant of the patent:
**31.03.2021  Bulletin 2021/13**

(21) Application number: **19158281.6**

(22) Date of filing: **20.02.2019**

(51) Int Cl.:
$H01M\ 4/36$ *(2006.01)*     $H01M\ 4/58$ *(2010.01)*
$H01M\ 4/62$ *(2006.01)*     $H01M\ 4/02$ *(2006.01)*
$H01M\ 4/66$ *(2006.01)*     $H01M\ 10/0525$ *(2010.01)*

(54) **CATHODE MATERIAL FOR LITHIUM-ION SECONDARY BATTERY,  ELECTRODE AND LITHIUM ION-SECONDARY BATTERY COMPRISING THE SAME**

KATHODENMATERIAL FÜR LITHIUM-IONEN-SEKUNDÄRBATTERIE, ELEKTRODE UND LITHIUM-IONEN-SEKUNDÄRBATTERIE DASSELBE UMFASSEND

MATÉRIAU DE CATHODE POUR BATTERIE SECONDAIRE LITHIUM-ION, ÉLECTRODE ET BATTERIE SECONDAIRE LITHIUM-ION LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2018  JP 2018154805**

(43) Date of publication of application:
**26.02.2020  Bulletin 2020/09**

(73) Proprietor: **Sumitomo Osaka Cement Co., Ltd.**
**Tokyo 102-8465 (JP)**

(72) Inventors:
• **YAMAYA, Ryuuta**
**Tokyo, 1028465 (JP)**

• **NOZOE, Tsutomu**
**Tokyo, 1028465 (JP)**

(74) Representative: **Müller-Boré & Partner**
**Patentanwälte PartG mbB**
**Friedenheimer Brücke 21**
**80639 München (DE)**

(56) References cited:
**EP-A1- 3 291 343       EP-A1- 3 301 741**
**WO-A1-2013/176067    JP-A- 2013 069 566**
**JP-A- 2018 032 567     US-A1- 2012 301 780**
**US-A1- 2018 062 165**

EP 3 614 466 B1

**Description**

BACKGROUND OF THE INVENTION

Field of the Invention

The present invention relates to a cathode material for a lithium ion secondary battery, an electrode for a lithium ion secondary battery in which the cathode material is used, and a lithium ion secondary battery including the electrode.

Description of Related Art

Lithium ion secondary batteries have a higher energy density and a higher power density than lead batteries and nickel-hydrogen batteries and are used in a variety of applications such as small-size electronic devices such as smartphones and the like, domestic backup power supply, electric tools, and the like. In addition, attempts are made to put high-capacity lithium ion secondary batteries into practical use for recyclable energy storage such as photovoltaic power generation, wind power generation, and the like.

Lithium ion secondary batteries include a cathode, an anode, an electrolyte, and a separator. As electrode materials that constitute cathodes, lithium-containing metal oxides having properties capable of reversibly intercalating and deintercalating lithium ions suchas lithium cobalt oxide ($LiCoO_2$), lithium manganese oxide ($LiMn_2O_4$), lithium iron phosphate ($LiFePO_4$), and the like are used, and studies are made in order for improvement from the viewpoint of an increase in the capacity of batteries, the extension of service lives, improvement of safety, cost reduction, and the like.

Lithium iron phosphate ($LiFePO_4$) as the electrode material contains iron which is an abundant and inexpensive resource and is thus a material the cost of whichcanbe easily reduced. Lithium iron phosphate does not emit oxygen at high temperatures due to the strong covalent bond between phosphorus and oxygen and thus has outstanding safety and the like, which provides lithium iron phosphate with excellent characteristics that oxide-based cathode materials represented by lithium cobalt oxide do not have.

$LiMPO_4$ (M represents a metal element) having an olivine structure which is represented by lithium iron phosphate has low Li ion diffusivity and low electron conductivity, and thus it is possible to improve the charge and discharge characteristics by miniaturizing $LiMPO_4$ primary particles and coating the surfaces 3 of the respective primary particles with a conductive carbonaceous film.

On the other hand, since the miniaturized $LiMPO_4$ has a large specific surface area, the area in which the cathode material comes into contact with an electrolyte increases, and the elution of metal ions into the electrolyte in association with a charge and discharge reaction becomes easy. Metal ions eluted into the electrolyte are reduced and precipitated on the anode, break the insulation of solid electrolyte interface (SEI) coats that are generated on the surface of the anode, and causes the additional generation of SEI, and thus there is a concern that a decrease in the battery capacity and an increase in the internal resistance of the batteries may be caused.

As the cathode material, Japanese Laid-open Patent Publication No. 2016-062644, Japanese Laid-open Patent Publication No. 2015-037012, and Pamphlet of International Publication No. WO 2013/024621 disclose cathode materials for a lithium ion secondary battery in which an inorganic phosphate compound or a metal oxide is added to the cathode or adsorbed to the surface of the cathode material, whereby the elution of metal from the cathode material is decreased, an increase in the internal resistance is suppressed, and the cycle characteristics are excellent

WO 2013/176067 A1 discloses a positive electrode active material for non-aqueous secondary batteries including a lithium manganese phosphate compound having an olivine-type structure, the surface of which is partly or entirely coated by a carbon material with a peak intensity ratio ($I_D/I_G$) between a D band and a G band in a Raman spectrum of at least 3.5.

JP 2018 032567 A, US 2018/062165 A1 and US 2012/301780 A1 describe cathode materials made of a carbon-coated lithium metal phosphate compound with a low carbon content and a crystallite diameter comprised between 35 and 125 nm.

EP 3 301 741 A1, EP 3 291 343 A1 and JP 2013 069566 A disclose cathode active materials for lithium-ion secondary batteries including central particles made of a lithium metal phosphate compound and a carbonaceous film that coats the surfaces thereof.

SUMMARY OF THE INVENTION

However, when an inorganic phosphate compound or a metal oxide that is electrochemically inert is added to the cathode or adsorbed to the surface of the cathode material, thereby forming a protective layer, not only does the electron conductivity of the cathode and the cathode material decrease, but the intercalation and deintercalation reaction of Li ions is also impaired, and the internal resistance of the battery increases. In addition, the inorganic phosphate compound or the metal oxide does not contribute to the charge and discharge reaction, and thus there is a concern that a decrease in the battery capacity may be caused.

The present invention has been made in consideration of the above-described circumstances, and an object of the present invention is to provide a cathode material for a lithium ion secondary battery which suppresses the deterioration of the durability of electrodes accompanied by the elution of metal from cathode materials and enables the obtainment of lithium ion secondary batteries having both high input and output characteristics and favorable cycle characteristics, an electrode for a lithium ion secondary battery in which the cathode material is used, and a lithium ion secondary battery including the electrode.

The present inventors carried out intensive studies inorder to achieve the above-described object and consequently found that, when the amount of carbon per the crystallite diameter of a cathode active material is set in a specific range, and the peak intensity ratio ($I_D/I_G$) between a D band and a G band in a Raman spectrum is set in a specific range, the elution of metal from a cathode material is decreased, the deterioration of the durability of an electrode is suppressed, and a lithium ion secondary battery having both high input and output characteristics and favorable cycle characteristics can be obtained.

The present invention has been completed on the basis of the above-described finding.

That is, the present invention provides [1] to below.

[1] A cathode material for a lithium ion secondary battery including agglomerated particles formed by agglomeration of a plurality of primary particles of a cathode active material represented by General Formula (1) which are coated with a carbonaceous film, in which an amount of carbon per a crystallite diameter of the cathode active material is 0.008% by mass/nm or more and 0 . 050% by mass/nm or less, and a peak intensity ratio ($I_D/I_G$) between a D band and a G band in a Raman spectrum obtained by Raman spectrometry is 0.85 or more and 1.15 or less.

$$Li_x A_y D_z PO_4 \qquad (1)$$

wherein A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9<x<1.1$, $0<y\leq1$, $0\leq z<1$, and $0.9 < y+z < 1.1$,

wherein the particle diameter (D10) at a cumulative percentage of 10% in a cumulative particle size distribution of the cathode material is 1 $\mu$m or more and 5 $\mu$m or less, and a particle diameter (D90) at a cumulative percentage of 90% is 15 $\mu$m or less.

[2] The cathode material for a lithium ion secondary battery according to [1], in which the crystallite diameter of the cathode active material is 60 nm or more and 100 nm or less.

[3] The cathode material for a lithium ion secondary battery according to [1] or [2] , in which the amount of carbon in the cathode material is 0.5% by mass or more and 3.0% by mass or less, and a powder resistance is 10,000 $\Omega\cdot$cm or less.

[4] The cathode material for a lithium ion secondary battery according to any one of [1] to [3] , in which a specific surface area of the cathode material is 12 $m^2$/g or more and 30 $m^2$/g or less.

[5] An electrode for a lithium ion secondary battery including an aluminum current collector and a cathode mixture layer formed on the aluminum current collector, in which the cathode mixture layer contains the cathode material for a lithium ion secondary battery according to any one of [1] to [4].

[6] A lithium ion secondary battery having a cathode, an anode, and an electrolyte, in which the cathode is the electrode for a lithium ion secondary battery according to [5]

According to the present invention, it is possible to provide a cathode material for a lithium ion secondary battery which suppresses the deterioration of the durability of electrodes accompanied by the elution of metal from cathode materials and enables the obtainment of lithium ion secondary batteries having both high input and output characteristics and favorable cycle characteristics, an electrode for a lithium ion secondary battery in which the cathode material is used, and a lithium ion secondary battery including the electrode.

DETAILED DESCRIPTION OF THE INVENTION

Cathode material for lithium ion secondary battery

A cathode material for a lithium ion secondary battery of the present embodiment (hereinafter, also simply referred to as the cathode material) is a cathode material for a lithium ion secondary battery including agglomerated particles formed by agglomeration of a plurality of primary particles of a cathode active material represented by General Formula (1) which are coated with a carbonaceous film, in which an amount of carbon per a crystallite diameter of the cathode active material is 0.008% by mass/nm or more and 0.050% by mass/nm or less, and a peak intensity ratio ($I_D/I_G$) between a D band and a G band in a Raman spectrum obtained by Raman spectrometry is 0.85 or more and 1.15 or less.

$$Li_xA_yD_zPO_4 \qquad (1)$$

wherein A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9<x<1.1$, $0<y\leq1$, $0\leq z<1$, and $0.9 < y+z < 1.1$.

The cathode active material that is used in the present embodiment is represented by General Formula (1).

Here, A is preferably Co, Mn, Ni, or Fe, and more preferably Fe. D is preferably Mg, Ca, Sr, Ba, Ti, Zn, or Al. In a case in which the cathode active material includes these elements, it is possible to produce cathode mixture layers capable of realizing a high discharge potential and favorable safety. In addition, these elements are resources having an abundant amount and are thus preferred as materials to be selected.

The crystallite diameter of the cathode active material represented by General Formula (1) which is coated with a carbonaceous film is preferably 50 nm or more and 100 nm or less, more preferably 60 nm or more and 90 nm or less, and still more preferably 60 nm or more and 85 nm or less. When the crystallite diameter of the cathode active material is 50 nm or more, it becomes easy to uniformly coat the surfaces of the primary particles of the cathode active material with a carbonaceous film. As a result, in a lithium ion secondary battery in which the cathode material for a lithium ion secondary battery of the present embodiment, an increase in the internal resistance during high-speed charge and discharge is suppressed, and a sufficient charge and discharge performance can be realized. On the other hand, when the crystallite diameter of the cathode active material is 100 nm or less, it is possible to suppress the lattice distortion accompanied by the intercalation and deintercalation reaction of lithium ions during the charging and discharging of the lithium ion secondary battery, and it is possible to decrease the elution amount of metal. Therefore, it is possible to suppress the deterioration of the durability of the electrode. In addition, when the crystallite diameter of the cathode active material is in the above-described range, it is possible to set the amount of carbon per crystallite diameter of the cathode active material in a range described below.

The crystallite diameter of the cathode active material can be computed by measuring a diffraction pattern using a powder X-ray diffractometer under the following measurement conditions.

Radiation source: Cu-K$\alpha$
Step size: 0.01°/step
Scan rate: 3 seconds/step

In the measured diffraction pattern, the crystallite diameter is computed using Expression (i).

Crystallite diameter

$$(nm) = \{0.9 \times 1.5418 \times 0.1\} / \{\beta(Å) \times \cos(29.78/2 \times \pi/2)\} \quad (i)$$

$$\beta = (B - b)$$

In the expression, B represents the full width at half maximum of a peak in a 2θ range of 28.8° to 30.8° in a diffraction pattern measured for the cathode material, and b represents the full width at half maximum of a standard specimen Si (2θ=47.3°).

The amount of carbon per the crystallite diameter of the cathode active material is 0.008% by mass/nm or more and 0.050% by mass/nm or less. When the amount of carbon per the crystallite diameter of the cathode active material is less than 0.008% by mass/nm, the elution amount of metal from the cathode material increases, and there is a concern that the durability of the electrode may degrade. On the other hand, when the amount of carbon per the crystallite diameter of the cathode active material is more than 0.050% by mass/nm, the thickness of the carbonaceous film becomes thick, and thus the intercalation and deintercalation reaction of lithium ions is impaired, and there is a concern that the discharge capacity during the high-speed charge and discharge of the lithium ion secondary battery may decrease. From the above-described viewpoint, the amount of carbon per the crystallite diameter of the cathode active material is preferably 0.008% by mass/nm and 0.045% by mass/nm or less and more preferably 0.008% by mass/nm and 0.040% by mass/nm or less.

The average primary particle diameter of the primary particles of the cathode active material (carbonaceous-coaated electrode active material) is preferably 50 nm or more and 400 nm or less, more preferably 60 nm or more and 300 nm or less, and still more preferably 60 nm or more and 200 nm or less. When the average primary particle diameter of the primary particles is 50 nm or more, it becomes easy to uniformly coat the surfaces of the primary particles of the cathode active material with the carbonaceous film, it is possible to substantially increase the discharge capacity during high-speed charge and discharge, and a sufficient charge and discharge performance can be realized. On the other hand, when the average primary particle diameter of the primary particles is 400 nm or less, it is possible to decrease the internal resistance of the primary particles of the cathode active material, and it is possible to increase the discharge capacity during high-speed charge and discharge of the lithium ion secondary battery.

Here, the average primary particle diameter is a number-average particle diameter. The average primary particle diameter of the primary particles can be obtained by randomly selecting 100 primary particles, measuring the long diameters and short diameters of the respective primary particles using a scanning electron microscope (SEM), and obtaining an average value thereof.

The carbonaceous film is a film for imparting desired electron conductivity to the primary particles and a pyrolytic carbonaceous film which is obtained by carbonizing an organic compound that is a carbonaceous film precursor.

The thickness of the carbonaceous film is preferably 0.5 nm or more and 5.0 nm or less and more preferably 1.0 nm or more and 3.0 nm or less. When the thickness of the carbonaceous film is 0.5 nm or more, the thickness of the carbonaceous film becomes too thin, and it is possible to form a film having a desired resistance value. As a result, the conductivity improves, and it is possible to ensure conductivity suitable for cathode materials. On the other hand, when the thickness of the carbonaceous film is 5.0 nm or less, it is possible to suppress a decrease in battery activity, for example, the battery capacity of the cathode material per unit mass.

The amount of carbon included in the cathode material is preferably 0.5% by mass or more and 3.0% by mass or less and more preferably 0.7% by mass or more and 2.5% by mass or less. When the amount of carbon is 0.5% by mass or more, it is possible to ensure conductivity suitable for cathode materials, the discharge capacity at a high charge-discharge rate increases in a case in which a lithium ion secondary battery is formed, and it is possible to realize sufficient charge and discharge characteristics. On the other hand, when the amount of carbon is 3.0% by mass or less, the amount of carbon excessively increases more than necessary, and it is possible to suppress a decrease in the battery capacity per unit mass of the cathode material for a lithium ion secondary battery. In addition, when the amount of carbon is in the above-described range, it is possible to set the amount of carbon per crystallite diameter of the cathode active material in the above-described range.

The coating ratio of the carbonaceous film to the primary particles is preferably 60% or more and more preferably 80% or more. When the coating ratio of the carbonaceous film is 60% or more, the coating effect of the carbonaceous film can be sufficiently obtained.

Meanwhile, the coating ratio of the carbonaceous film can be measured using a transmission electron microscope (TEM), an energy dispersive X-ray microanalyzer (EDX), or the like.

The density of the carbonaceous film, which is computed using a carbon component that constitutes the carbonaceous film, is preferably 0.3 $g/cm^3$ or more and 1.5 $g/cm^3$ or less and more preferably 0.4 $g/cm^3$ or more and 1.0 $g/cm^3$ or less. The density of the carbonaceous film, which is computed using a carbon component that constitutes the carbonaceous film, is the mass per unit volume of the carbonaceous film in a case in which the carbonaceous film is assumed to be constituted of carbon alone.

When the density of the carbonaceous film is 0.3 $g/cm^3$ or more, the carbonaceous film exhibits sufficient electron conductivity. On the other hand, when the density of the carbonaceous film is 1.5 $g/cm^3$ or less, the content of the fine crystals of graphite having a lamellar structure in the carbonaceous film is small, and thus the steric barrier by the fine crystals of graphite is not caused when Li ions diffuse in the carbonaceous film. Therefore, there is no case in which the charge migration resistance increases. As a result, there is no case in which the internal resistance of the lithium ion secondary battery increases, and voltage drop at a high charge-discharge rate of the lithium ion secondary battery is not caused.

The average secondary particle diameter of the agglomerated particles formed by the agglomeration of a plurality of the primary particles is preferably 0.5 $\mu$m or more and 15 $\mu$m or less and more preferably 1.0 $\mu$m or more and 10 $\mu$m or less. When the average secondary particle diameter of the agglomerated particles is 0.5 $\mu$m or more, it is possible to suppress the blending amount of a conductive auxiliary agent and a binder when a cathode material paste for a lithium ion secondary battery is prepared by mixing the cathode material, the conductive auxiliary agent, anda binder resin (the binder) together, and it is possible to increase the battery capacity of lithium ion secondary batteries per unit mass of a cathode mixture layer for a lithium ion secondary battery. On the other hand, when the average secondary particle diameter of the agglomerated particles is 15 $\mu$m or less, it is possible to enhance the dispersibility and uniformity of the conductive auxiliary agent or the binder in the cathode mixture layer. As a result, lithium ion secondary batteries for which the cathode material for a lithium ion secondary battery of the present embodiment is used are capable of increasing the discharge capacity during high-speed charge and discharge.

Here, the average secondary particle diameter is a volume-average particle diameter. The average secondary particle diameter of the agglomerated particles can be measured using a laser diffraction and scattering particle size distribution analyzer or the like.

The agglomerated particles are preferably solid particles since it is possible to make the electrode structure uniform. Here, the solidparticle refers to a particle substantially having no space therein and may include unintentionally-formed spaces such as micropores or the like among the primary particles . When the electrode structure is uniform, it is possible to suppress overvoltage attributed to electrode reaction unevenness, and it is possible to decrease the elution amount of metal. In addition, the Li ion conductivity and the electron conductivity improve, furthermore, the calender pressure during the production of the electrode is suppressed, and it is possible to suppress the peeling of the carbonaceous film due to the collapse of the agglomerated particles. In addition, it is possible to prevent the dropping of the electrode mixture layer from an aluminum current collector. Therefore, it is possible to suppress the degradation of battery characteristics.

The particle diameters (D10) at a cumulative percentage of 10% in the cumulative particle size distribution of the cathode material including the agglomerated particles is 1 $\mu$m or more and 5 $\mu$m or less, preferably 1.5 $\mu$m or more and 4 $\mu$m or less, and more preferably 1.8 $\mu$m or more and 3 $\mu$m or less. When D10 is in the above-described range, it is possible to uniform the structure of the cathode mixture layer obtained by applying and drying the cathode material paste for a lithium ion secondary battery on the aluminum current collector, local overvoltage attributed to a charge and discharge reaction is suppressed, and it is possible to decrease the elution amount of metal.

In addition, the particle diameters (D90) at a cumulative percentage of 90% in the cumulative particle size distribution of the cathode material including the agglomerated particles is 15 $\mu$m or less, preferably 14 $\mu$m or less, and more preferably 13 $\mu$m or less. When D90 is 15 $\mu$m or less, the diameters of the agglomerated particles become too large relative to the thickness of the cathode mixture layer, protrusions and recesses are not easily generated on the surface of the cathode mixture layer, and the structure of the cathode mixture layer becomes uniform. Inaddition, the lower limit value of D90 is not particularly limited, but is preferably 3 $\mu$m or less.

In addition, the shape of the agglomerated particle for improving the loading properties of the cathode material into the cathode mixture layer and improving the battery capacity per unit volume is not particularly limited, but is preferably spherical, particularly, truly spherical.

The specific surface area of the cathode material is preferably 12 m$^2$/g or more and 30 m$^2$/g or less, more preferably 12 m$^2$/g or more and 26 m$^2$/g or less, and still more preferably 13 m$^2$/g or more and 24 m$^2$/g or less. When the specific surface area is 12 m$^2$/g or more, the Li ion diffusion resistance or the electron migration resistance in the primary particles of the cathode material for a lithium ion secondary battery decreases. Therefore, it is possible to decrease the internal resistance, and the output characteristics can be improved. On the other hand, when the specific surface area is 30 m$^2$/g or less, the specific surface area of the cathode material for a lithium ion secondary battery does not excessively increase, the mass of necessary carbon is suppressed, and it is possible to improve the battery capacity of lithium ion secondary batteries per unit mass of the cathode material for a lithium ion secondary battery.

Meanwhile, the specific surface areas can be measured using the BET method and a specific surface area meter (for example, manufactured by Mountech Co., Ltd., trade name: HM model-1208) .

The peak intensity ratio ($I_D/I_G$) between a D band and a G band in a Raman spectrum obtained by Raman spectrometry of the cathode material of the present embodiment is 0.85 or more and 1.15 or less. When the peak intensity ratio ($I_D/I_G$) between the D band and the G band is less than 0.85, it becomes difficult for lithium ions to diffuse between graphite layers in the carbonaceous films, the elution amount of metal increases due to overvoltage accompanied by a decrease in ion conductivity, and there is a concern that the durability of the electrode may degrade. In addition, when the peak intensity ratio ($I_D/I_G$) between the D band and the G band becomes more than 1.15, the degree of graphitization of the carbonaceous film is insufficient, the oxidation and decomposition of the carbonaceous film that functions as a protective layer of the cathode active material is accelerated in association with the charge and discharge reaction, the elution amount of metal increases, and there is a concern that the durability of the electrode may degrade. From the above-described viewpoint, the peak intensity ratio ($I_D/I_G$) between the D band and the G band is preferably 0.86 or more and 1.12 or less and more preferably 0.86 or more and 1.10 or less.

Meanwhile, the G band refers to a peak appearing in the vicinity of 1,590 cm$^{-1}$ of the Raman spectrum and a peak belonging to the graphite structure of the carbonaceous film. Meanwhile, the D band refers to a peak appearing in the vicinity of 1,350 cm$^{-1}$ of the Raman spectrum and a peak attributed to a defect of the carbonaceous film.

The Raman spectrum can be measured using a Raman spectrometer (for example, LabRab HR evolution UV-VIS-NIR manufactured by Horiba Ltd.).

The powder resistance of the cathode material of the present embodiment is preferably 10,000 $\Omega$·cm or less, more preferably 9,500 $\Omega$·cm or less, still more preferably 5,000 $\Omega$·cm or less, and far still more preferably 1,000 $\Omega$·cm or less. The powder resistance of the cathode material can be measured by four point measurement in which the cathode material is injected into a die and pressurized at a pressure of 50 MPa to produce a compact and four probes are brought into contact with the surface of the compact.

When the powder resistance of the cathode material is 10,000 Ω·cm or less, it is possible to improve the electron conductivity of an electrode for a lithium ion secondary battery in which the cathode material is used.

Method for manufacturing cathode material for lithium ion secondary battery

A method for manufacturing a cathode material for a lithium ion secondary battery of the present embodiment has, for example, a manufacturing step of the cathode active material represented by General Formula (1) and a cathode active material precursor, a slurry preparation step of preparing a slurry by mixing at least one cathode active material raw material selected from the group consisting of the cathode active material and the cathode active material precursor obtained in the manufacturing step and water, a cracking treatment step of cracking the cathode active material raw material slurry obtained in the slurry preparation step, a granulation step of obtaining a granulated substance by adding an organic compound that is a carbonaceous film precursor to the cracked slurry obtained in the cracking treatment step, and a calcination step of calcinating the granulated substance obtained in the granulation step in a non-oxidative atmosphere.

Method for manufacturing cathode active material and cathode active material precursor

As the manufacturing step of the cathode active material represented by General Formula (1) and the cathode active material precursor, it is possible to use a method of the related art such as a solid phase method, a liquid phase method, a gas phase method, or the like. Examples of $Li_xA_yD_zPO_4$ obtained using the above-described method include particulate $Li_xA_yD_zPO_4$ (hereinafter, in some cases, referred to as "$Li_xA_yM_zPO_4$ particles").

The $Li_xA_yD_zPO_4$ particles can be obtained by, for example, hydrothermally synthesizing a slurry-form mixture obtained by mixing a Li source, an A source, a P source, water, and, as necessary, a D source. In addition, when the Li source, the A source, the P source, water, and, as necessary, the D source are mixed together, a pH adjuster such as ammonia water ($NH_3$) is preferably added from the viewpoint of controlling the crystallite diameters and primary particle diameters of the cathode active material particles in desired ranges.

According to the hydrothermal synthesis, $Li_xA_yD_zPO_4$ is generated as a precipitate in water. The obtained precipitate may be a precursor of $Li_xA_yD_zPO_4$. In this case, target $Li_xA_yD_zPO_4$ particles are obtained by calcinating the precursor of $Li_xA_yD_zPO_4$.

In this hydrothermal synthesis, a pressure-resistant airtight container is preferably used.

In addition, the temperature of the hydrothermal synthesis is preferably 12 0 °C or higher and 200°C or lower and more pref erably 130°C or higher and 190°C or lower. When the temperature of the hydrothermal synthesis is in the above-described range, it is possible to set the amount of carbon per crystallite diameter of the cathode active material in the above-described range.

Here, as the Li source, at least one selected from the group consisting of hydroxides such as lithium hydroxide (LiOH) and the like; lithium inorganic acid salts such as lithium carbonate ($Li_2CO_3$), lithium chloride (LiCl), lithium nitrate ($LiNO_3$), lithium phosphate ($Li_3PO_4$), lithium hydrogen phosphate ($Li_2HPO_4$), lithium dihydrogen phosphate ($LiH_2PO_4$), and the like; lithium organic acid salts such as lithium acetate ($LiCH_3COO$), lithium oxalate (($COOLi)_2$), and the like; and hydrates thereof is preferably used.

Meanwhile, lithium phosphate ($Li_3PO_4$) can also be used as the Li source and the P source.

Examples of the A source include chlorides, carboxylates, hydrosulfates, and the like which include at least one element selected from the group consisting of Co, Mn, Ni, Fe, Cu, and Cr. For example, in a case in which A in $Li_xA_yD_zPO_4$ is Fe, examples of the Fe source include divalent iron salts such as iron (II) chloride ($FeCl_2$), iron (II) acetate (Fe ($CH_3COO)_2$), iron (II) sulfate ($FeSO_4$), and the like. Among these, as the Fe source, at least one selected from the group consisting of iron (II) chloride, iron (II) acetate, and iron (II) sulfate is preferably used.

Examples of the D source include chlorides, carboxylates, hydrosulfates, and the like which include at least one element selected from the group consisting of Mg, Ca, Sr, Ba, Ti, Zn, B, Al, Ga, In, Si, Ge, Sc, and Y.

Examples of the P source include phosphoric acid compounds such as phosphoric acid ($H_3PO_4$), ammonium dihydrogen phosphate ($NH_4H_2PO_4$), diammonium phosphate (($NH_4)_2HPO_4$), and the like. Among these, as the P source, at least one selected from the group consisting of phosphoric acid, ammonium dihydrogen phosphate, and diammonium phosphate is preferably used.

Slurry preparation step

In the present step, a cathode active material raw material obtained in the above-described step is dispersed in water, thereby preparing a homogeneous slurry. When the cathode active material raw material is dispersed in water, it is also possible to add a dispersant thereto.

A method for dispersing the cathode active material raw material in water is not particularly limited, and it is preferable to use, for example, a medium stirring-type dispersion device that stirs medium particles at a high rate such as a planetary ball mill, an oscillation ball mill, a bead mill, a paint shaker, an attritor, or the like.

Cracking treatment step

In the present step, the cathode active material raw material slurry obtained in the slurry preparation step is cracked. A method for cracking the cathode active material raw material slurry is not particularly limited, and examples thereof include a method in which the cracking treatment is carried out using a medium stirring-type dispersion device in which medium particles that are used to disperse the cathode active material raw material in water in the slurry preparation step are stirred at a high speed. Meanwhile, the slurry preparation step and the cracking treatment step may be carried out at the same time.

When the cathode active material raw material slurry is cracked, the cracking treatment is controlled so that the ratio (D90/D10) of the particle diameter (D90) at a cumulative percentage of 90% to the particle diameter (D10) at a cumulative percentage of 10% in the cumulative particle size distribution of the cathode active material raw material in the slurry preferably reaches 1 or more and 10 or less. When the ratio (D90/D10) is set to 1 or more and 10 or less, the dispersibility of the cathode active material particles in the slurry improves.

Meanwhile, the cracking conditions of the slurry can be adjusted using, for example, the material and diameter of a dispersion medium, the concentration of the cathode active material raw material in the slurry, the stirring rate, the stirring time, and the like.

Granulation step

In the present step, an organic compound that is a carbonaceous film precursor is mixed into the cathode active material raw material in the cracked slurry, thereby manufacturing a granulated substance. The organic compound is not particularly limited as long as the compound is capable of forming the carbonaceous film on the surface of the cathode active material, and examples thereof include polyvinyl alcohol (PVA), polyvinyl pyrrolidone, cellulose, starch, gelatin, carboxymethyl cellulose, methyl cellulose, hydroxymethyl cellulose, hydroxyethyl cellulose, polystyrene sulfonate, polyacrylamide, polyacrylic acid, polyvinyl acetate, glucose, fructose, galactose, mannose, maltose, sucrose, lactose, glycogen, pectin, alginic acid, glucomannan, chitin, citric acid, hyaluronic acid, ascorbic acid, chondroitin, agarose, polyether, divalent alcohols, trivalent alcohols, and the like. Among these, polyvinyl alcohol (PVA), glucose, and sucrose are preferred. These organic compounds may be used singly or two or more organic compounds may be used in mixture.

The blending amount of the organic compound is adjusted to be preferably 3% to 15% by mass, more preferably 3.5% to 12% by mass, and still more preferably 4% to 10% by mass of the cathode active material particles in terms of the solid content of the organic compound. When the solid content is set in the above-described range, it is possible to respectively set the amount of carbon per crystallite diameter and the peak intensity ratio ($I_D/I_G$) between the D band and the G band in the Raman spectrum obtained by Raman spectrometry in the above-described ranges.

The granulated substance is preferably solidparticles from the viewpoint of exhibiting the effects of the present invention. In addition, it is also possible to mix a minimum necessary amount of an agglomeration-maintaining agent so as to prevent the collapse of the granulated substance. Here, the agglomeration-maintaining agent refers to a compound which helps the agglomeration of the primary particles and maintains the shape of the secondary particles formed by the agglomeration of the primary particles. Examples of the agglomeration-maintaining agent include organic acids such as citric acid, polyacrylic acid, ascorbic acid, and the like.

In addition, a carbonization catalyst for accelerating the carbonization of the organic compound in the calcination step described below may also be used.

In the present step, when a granulated substance is adjusted so that the concentration of the cathode active material raw material included in the cracked slurry preferably reaches 15% to 55% by mass and more preferably reaches 20% to 50% by mass, it is possible to spherical solid particles.

Next, the mixture obtained above is sprayed and dried in a high-temperature atmosphere in which the atmosphere temperature is the boiling point or higher of a solvent, for example, in the atmosphere at 100°C to 250°C.

Here, when the conditions during the spraying, for example, the concentration, spraying pressure, and rate of the cathode active material raw material in the cracked slurry, and furthermore, the conditions during the drying after the spraying, for example, the temperature-increase rate, the peak holding temperature, the holding time, and the like are appropriately adjusted, a dried substance having an average secondary particle diameter of the agglomerated particles, which has been described above, in the above-described range can be obtained.

The atmosphere temperature during the spraying and drying have an influence on the evaporation rate of the solvent in the cracked slurry, and the structure of a dried substance to be obtained can be controlled using the atmosphere temperature.

For example, as the atmosphere temperature approximates to the boiling point of the solvent in the cracked slurry, the time taken to dry sprayed liquid droplets extends, and thus the dried substance to be obtained sufficiently shrinks during the time required for the drying. Therefore, the dried substance sprayed and dried at the atmosphere temperature near the boiling point of the solvent in the cracked slurry is likely to have a solid structure.

Calcination step

In the present step, the granulated substance obtained in the above-described step is calcinated in a non-oxidative atmosphere. The granulated substance is calcined in a non-oxidative atmosphere at a temperature of preferably 650°C or higher and 1, 000°C or lower and more preferably 700°C or higher and 900°C or lower for 0.1 hours or longer and 40 hours or shorter.

When the calcination temperature is set in the above-described range, it is possible to set the peak intensity ratio ($I_D/I_G$) between the D band and the G band in the Raman spectrum obtained by Raman spectrometry in the above-described range.

The non-oxidative atmosphere is preferably an atmosphere filled with an inert gas such as nitrogen ($N_2$), argon (Ar), or the like. In a case in which it is necessary to further suppress the oxidation of the mixture, a reducing atmosphere including approximately several percentages by volume of a reducing gas such as hydrogen ($H_2$) or the like is preferred. In addition, for the purpose of removing organic components evaporated in the non-oxidative atmosphere during calcination, a susceptible or burnable gas such as oxygen ($O_2$) or the like may be introduced into the non-oxidative atmosphere.

Here, when the calcination temperature is set to 650°C or higher, it is easy for the organic compound in the mixture to be sufficiently decomposed and reacted, and the organic compound is easily and sufficiently carbonized. As a result, it is easy to prevent the generation of a high-resistance decomposed substance of the organic compound in the obtained agglomerated particles. Meanwhile, when the calcination temperature is set to 1, 000°C or lower, lithium (Li) in the cathode active material raw material is not easily evaporated, and the grain growth of the cathode active material to a size that is equal to or larger than the target size is suppressed. As a result, in a case in which a lithium ion secondary battery including an electrode including the cathode material of the present embodiment is produced, it is possible to prevent the discharge capacity at a high charge-discharge rate from decreasing, and it is possible to realize lithium ion secondary batteries having sufficient charge and discharge rate performance.

By means of the above-described steps, the organic compound in the mixture is carbonized, the primary particles that cover the surface of the cathode active material with the carbonaceous film derived from the organic compound are generated, and a plurality of the primary particles agglomerate together so as to become agglomerated particles.

Electrode for lithium ion secondary battery

An electrode for a lithium ion secondary battery of the present embodiment includes an aluminum current collector and a cathode mixture layer formed on the aluminum current collector, in which the cathode mixture layer contains the above-described cathode material for a lithium ion secondary battery. The cathode mixture layer contains the cathode material, and thus, in the electrode for a lithium ion secondary battery of the present embodiment, the elution amount of metal is decreased, and it is possible to suppress the deterioration of the durability.

Method for manufacturing electrode

In order to produce the electrode, the cathode material, a binder made of a binder resin, and a solvent are mixed together, thereby preparing a coating material for forming the electrode or paste for forming the electrode. At this time, a conductive auxiliary agent such as carbon black, acetylene black, graphite, Ketjen black, natural graphite, artificial graphite, or the like may be added thereto as necessary.

As the binder, that is, the binder resin, for example, a polytetrafluoroethylene (PTFE) resin, a polyvinylidene fluoride (PVdF) resin, fluorine rubber, or the like is preferably used.

The blending ratio between the cathode material and the binder resin is not particularly limited; however, for example, the amount of the binder resin is set to 1 part by mass or more and 30 parts by mass or less and preferably set to 3 parts by mass or more and 20 parts by mass or less with respect to 100 parts by mass of the cathode material.

The solvent that is used in the coating material for forming the electrode or the paste for forming the electrode may be appropriately selected depending on the properties of the binder resin.

Examples thereof include water; alcohols such as methanol, ethanol, 1-propanol, 2-propanol (isopropyl alcohol: IPA), butanol, pentanol, hexanol, octanol, diacetone alcohol, and the like; esters such as ethyl acetate, butyl acetate, ethyl lactate, propylene glycol monomethyl ether acetate, propylene glycol monoethyl ether acetate, γ-butyrolactone, and the like; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, diethylene glycol monoethyl ether, and the like; ketones such as acetone, methyl ethyl ketone (MEK), methyl isobutyl ketone (MIBK), acetylacetone, cyclohexanone, and the like; amides such as dimethyl formamide, N,N-dimethylacetoacetamide, N-methyl-pyrrolidone, and the like; glycols such as ethylene glycol, diethylene glycol, and propylene glycol, and the like. These solvents of the same kind may be used singly, or a mixture of two or more kinds of solvents may be used.

Next, the coating material for forming the electrode or the paste for forming the electrode is applied onto one surface of an aluminum foil and then dried, thereby obtaining an aluminum foil having a coated film made of the mixture of the cathode material and the binder resin formed on one surface.

Next, the coated film is pressed by pressure and dried, thereby producing a current collector (electrode) having an electrode material layer on one surface of the aluminum foil.

Lithium ion secondary battery

A lithium ion secondary battery of the present embodiment includes a cathode, an anode, and an electrolyte, and, as the cathode, the above-described electrode for a lithium ion secondary battery according is provided. Therefore, the elution amount of metal from the cathode material is decreased, the deterioration of the durability of the electrode can be suppressed, and it is possible to produce a lithium ion secondary battery having both high input and output characteristics and favorable cycle characteristics.

In the lithium ion secondary battery of the present embodiment, it is possible to set the elution amount of metal to preferably 1,000 ppm or less, more preferably 900 ppm or less, and still more preferably 800 ppm or less.

Examples of the anode include anodes including a carbon material such as metallic Li, natural graphite, hard carbon, or the like or an anode material such as a Li alloy, $Li_4Ti_5O_{12}$, Si ($Li_{4.4}Si$), or the like.

The electrolyte is not particularly limited, but is preferably a non-aqueous electrolyte, and examples thereof include electrolytes obtained by mixing ethylene carbonate (EC) and ethyl methyl carbonate (EMC) so that the volume ratio reaches 3:7 and dissolving lithium hexafluorophosphate ($LiPF_6$) in the obtained solvent mixture so that the concentration reaches 1 mol/dm$^3$.

The cathode and the anode can be made to face each other through a separator. As the separator, it is possible to use, for example, porous propylene.

In addition, instead of the non-aqueous electrolyte and the separator, a solid electrolyte may be used.

EXAMPLES

Hereinafter, the present invention will be specifically described using examples and comparative examples. Meanwhile, the present invention is not limited to forms described in the examples.

Synthesis of cathode material for lithium ion secondary battery

Example 1

Lithium phosphate ($Li_3PO_4$) as a Li source and a P source, iron (II) sulfate ($FeSO_4$) as a Fe source, and ammonia water ($NH_3$) as a pH adjuster were mixed together so that the molar ratio (Li:Fe:P:$NH_3$) reached 3:1:1:0.015. Furthermore, distilled water for preparation was mixed thereinto, thereby preparing a raw material slurry (600 mL).

Next, this raw material slurry was stored in a pressure-resistant airtight container, hydrothermally synthesized at 150°C for two hours, and cooled to room temperature (25°C), thereby obtaining cake-form cathode active material particles which were precipitated in the container. The cathode active material particles were sufficiently cleaned a plurality of times with distilled water, and then the cathode active material particles and the distilled water were mixed together so that the concentration of the cathode active material particles reached 60% by mass, thereby preparing a suspended slurry.

The suspended slurry was injected into a sand mill together with zirconia balls having a diameter of 0.3 mm, and a cracking treatment was carried out with the stirring rate and the stirring time of the sand mill adjusted so that the ratio (D90/D10) of the particle diameter (D90) at a cumulative percentage of 90% to the particle diameter (D10) at a cumulative percentage of 10% in the cumulative particle size distribution of the cathode active material particles reached two.

Next, a glucose aqueous solution adjusted to 20% by mass in advance was mixed into the slurry on which the crushing treatment had been carried out in an amount of 5. 0% by mass of the cathode active material particles in terms of the glucose solid content, furthermore, distilled water mixed thereinto so that the concentration of the cathode active material particles in the cracked slurry reached 30% by mass, and then the slurry was sprayed and dried in the atmosphere at 180°C, thereby obtaining a granulated dried substance of the cathode active material particles.

Next, the obtained dried substance was thermally treated in an inert atmosphere at 725°C for one hour, thereby supporting carbon in the cathode active material particles and producing a cathode material for a lithium ion secondary battery of Example 1.

Example 2

A cathode material for a lithium ion secondary battery of Example 2 was produced in the same manner as in Example 1 except for the fact that a glucose aqueous solution adjusted to 20% by mass in advance was mixed into the slurry on which the crushing treatment had been carried out in an amount of 7.5% by mass of the cathode active material particles in terms of the glucose solid content.

Example 3

A cathode material for a lithium ion secondary battery of Example 3 was produced in the same manner as in Example 1 except for the fact that a glucose aqueous solution adjusted to 20% by mass in advance was mixed into the slurry on which the crushing treatment had been carried out in an amount of 10.0% by mass of the cathode active material particles in terms of the glucose solid content.

Example 4

A cathode material for a lithium ion secondary battery of Example 4 was produced in the same manner as in Example 1 except for the fact that a glucose aqueous solution adjusted to 20% by mass in advance was mixed into the slurry on which the crushing treatment had been carried out in an amount of 3.7% by mass of the cathode active material particles in terms of the glucose solid content.

Example 5

A cathode material for a lithium ion secondary battery of Example 5 was produced in the same manner as in Example 1 except for the fact that the granulated dried substance obtained by spraying and drying was thermally treated in an inert atmosphere at 775°C for one hour.

Example 6

A cathode material for a lithium ion secondary battery of Example 6 was produced in the same manner as in Example 5 except for the fact that a glucose aqueous solution adjusted to 20% by mass in advance was mixed into the slurry on which the crushing treatment had been carried out in an amount of 7.5% by mass of the cathode active material particles in terms of the glucose solid content.

Example 7

A cathode material for a lithium ion secondary battery of Example 7 was produced in the same manner as in Example 5 except for the fact that a glucose aqueous solution adjusted to 20% by mass in advance was mixed into the slurry on which the crushing treatment had been carried out in an amount of 10.0% by mass of the cathode active material particles in terms of the glucose solid content.

Comparative Example 1

A cathode material for a lithium ion secondary battery of Comparative Example 1 was produced in the same manner as in Example 1 except for the fact that a glucose aqueous solution adjusted to 20% by mass in advance was mixed into the slurry on which the crushing treatment had been carried out in an amount of 2.5% by mass of the cathode active material particles in terms of the glucose solid content.

Comparative Example 2

A cathode material for a lithium ion secondary battery of Comparative Example 2 was produced in the same manner as in Example 5 except for the fact that a glucose aqueous solution adjusted to 20% by mass in advance was mixed into the slurry on which the crushing treatment had been carried out in an amount of 3.7% by mass of the cathode active material particles in terms of the glucose solid content.

Comparative Example 3

Lithium phosphate (Li$_3$PO$_4$) as a Li source and a P source and iron (II) sulfate (FeSO$_4$) as a Fe source, were mixed together so that the molar ratio (Li: Fe:P) reached 3:1:1:, and, furthermore, distilled water for preparation was mixed thereinto, thereby preparing a raw material slurry (600 mL).
Next, this raw material slurry was stored in a pressure-resistant airtight container and hydrothermally synthesized at 180°C for two hours. A cathode material for a lithium ion secondary battery of Comparative Example 3 was produced in the same manner as in Example 1 except for what has been described above.

Comparative Example 4

A cathode material for a lithium ion secondary battery of Comparative Example 4 was produced in the same manner as in Comparative Example 3 except for the fact that the granulated dried substance obtained by spraying and drying was thermally treated in an inert atmosphere at 775°C for one hour.

Evaluation of cathode materials

The obtained cathode materials for a lithium ion secondary battery were evaluated using the following methods. The results are shown in Table 1.

(1) Amount of carbon in cathode material

The amount of carbon was measured using a carbon analyzer (manufactured by Horiba Ltd., trade name: EMIA-220V).

(2) Crystallite diameter of cathode active material

The diffraction pattern was measured using a powder X-ray diffractometer (manufactured by Malvern PANalytical Ltd, trade name: X'pert MPD) under the following measurement conditions.

Radiation source: Cu-K$\alpha$
Step size: 0.01°/step
Scan rate: 3 seconds/step

In the measured diffraction pattern, the crystallite diameter was computed using Expression (i).

Crystallite diameter

$$(nm) = \{0.9 \times 1.5418 \times 0.1\} / \{\beta(\text{Å}) \times \cos(29.78/2 \times \pi/2)\} \quad (i)$$

$$\beta = (B - b)$$

In the expression, B represents the full width at half maximum of a peak in a 2θ range of 28.8° to 30.8° in a diffraction pattern measured for the cathode material, and b represents the full width at half maximum of a standard specimen Si (2θ=47.3°).

(3) Amount of carbon per crystallite diameter of cathode active material (amount of carbon/crystallite diameter)

The amount of carbon per crystallite diameter of the cathode active material was computed from the amount of carbon in the cathode material measured in (1) and the crystallite diameter of the cathode active material measured in (2).

(4) Peak intensity ratio ($I_D/I_G$) between D band and G band

The Raman spectrum of the cathode material was measured using a Raman spectrometer (for example, LabRab HR evolution UV-VIS-NIR manufactured by Horiba Ltd.).

On the Raman spectrum obtained by this measurement, a feeding treatment was carried out by the convolution of the Gauss function and the Lorenz function (analysis software: LabSpec6, function name: GaussLor (manufactured by Horiba Ltd.)), and the peak intensity ratio ($I_D/I_G$) between the D band and the G band were computed from the peak intensity ($I_D$) of the obtained D band and the peak intensity ($I_G$) of the obtained G band.

(5) Specific surface area

The specific surface area was measured using the BET method by means of nitrogen ($N_2$) adsorption and a specific surface area meter (for example, manufactured by Mountech Co., Ltd., trade name: HM model-1208).

(6) Powder resistance

The cathode material was injected into a die and pressurized at a pressure of 50 MPa, thereby producing a compact. The powder resistance value of the compact was measured by four point measurement using a low resistivity meter (manufactured by Mitsubishi Chemical Analytech Co., Ltd., trade name: Loresta-GP) at 25°C.

(7) Particle diameter (D10) at cumulative percentage of 10% and particle diameter (D90) at cumulative percentage of 90% in cumulative particle size distribution

Particle diameters were measured using a laser diffraction-type particle size distribution analyzer (manufactured by Horiba Ltd., trade name: LA-950V2). In addition, the number of times of data scanning in the measurement using the laser diffraction-type particle size distribution analyzer was set to 5,000 times for a semiconductor laser (LD) and 1,000 times for a light-emitting diode (LED), and the data computation conditions were as described below.

<Computation conditions>

(Sample refractive index)

LD real part: 1.70
LD imaginary part: 0.20
LED real part: 1.70
LED imaginary part: 0.20
(Dispersion medium refractive index)
LD real part: 1.33
LD imaginary part: 0.00
LED real part: 1.33
LED imaginary part: 0.00
(Number of times of repetition): 15 times
(Particle diameter standard): Volume
(Computation algorithm): Standard computation

Meanwhile, a dispersion solution on which the following pretreatment was carried out was used as a measurement specimen.

Pure water (40 g), polyvinyl pyrrolidone (PVP, 0.12 g), and the cathode material (0.04 g) were weighed in a 70 mL mayonnaise bottle. This mayonnaise bottle was manually shaken approximately 10 times, thereby blending the cathode material, the polyvinyl pyrrolidone, and the pure water. Next, a dispersion solution obtained by carrying out an ultrasonic treatment on this mixed solution using an ultrasonic homogenizer (manufactured by BRANSON Ultrasonics, trade name: SONIFIER 450) under conditions of an output of 5 and a pulse of 50% for two minutes was used as a measurement specimen.

Production of cathodes

The obtained cathode material, polyvinylidene fluoride (PVdF) as a binding agent, and acetylene black (AB) as a conductive auxiliary agent were mixed together so that the mass ratio therebetween reached 90:5:5, and furthermore, N-methylpyrrolidone was added thereto as a solvent so that the total solid content reached 40% by mass, thereby imparting fluidity and producing a slurry.

Next, this slurry was applied and dried at a reducedpressure and 120°C on a 30 $\mu$m-thick aluminum (Al) foil (current collector) . After that, the product was cut into a strip shape having an application width of 35 mm and pressurized twice using a roll calendering machine with a roll gap of 5 $\mu$m at a roll feed rate of 0.5 m/min, thereby producing a cathode of each of the examples and the comparative examples.

Production of lithium ion secondary batteries

Pieces having a predetermined size were obtained from the cathode produced using the above-described method and an anode made of commercially available natural graphite by punching, current-collecting tabs were welded to the cathode and the anode respectively, and the cathode and the anode were disposed in an aluminum laminate film through a separator made of a porous polypropylene film. An electrolyte obtained by dissolving $LiPF_6$ in a solution obtained by mixing ethylene carbonate (EC) and ethyl methyl carbonate (EMC) so that the volume ratio (EC:EMC) reaches 30:70 (vol%) so as to obtain a concentration of 1 mol/$dm^3$ was injected into the aluminum laminate film and sealed, thereby producing a lithium ion secondary battery for battery characteristic evaluation.

Evaluation of lithium ion secondary batteries

The obtained lithium ion secondary batteries were evaluated using the following methods. The results are shown in Table 1.

(8) Direct current resistance (DCR)

The direct current resistance was measured using a lithium ion secondary battery having a depth of charge adjusted to 50% (SOC 50%) at an ambient temperature of 0°C. In the lithium ion secondary battery adjusted to SOC 50% at room temperature (25°C) and a charge rate of 0.1, currents were made to flow at an ambient temperature of 0°C on the charge side and the discharge side alternatively at 1C, 3C, 5C, and 10C rates for ten seconds each, the current values and the voltage values after 10 seconds at the respective rates were plotted in the horizontal axis and the vertical axis respectively, and the slopes of the approximate value line obtained using the least square method on the charge side and on the discharge side were considered as "input DCR" and "output DCR" respectively. Meanwhile, at the respective currents, a 10-minute quiescent time was provided whenever the current flow direction or the flowing current was changed.

(9) Cycle characteristics (capacity retention)

Regarding the cycle characteristics, charging and discharging were repeated 500 times at an ambient temperature of 60°C, a cut-off voltage of 2.0 V to 4.1 V, and a constant current of a charge and discharge rate of 2C (30-minute charging and then 30-minute discharging), the ratio of the discharge capacity at the 500th cycle to the discharge capacity at the first cycle was considered as the cycle characteristics, and the cycle characteristics were computed using Expression (ii).

$$\text{Capacity retention (\%)} = (\text{discharge capacity at } 500^{\text{th}}$$

$$\text{cycle/discharge capacity at first cycle}) \times 100 \cdots \quad \text{(ii)}$$

(10) Elution amount of iron

The lithium ion secondary battery of which the cycle characteristics had been evaluated was disassembled, and the graphite anode was removed. The removed graphite anode was sufficiently cleansed with diethyl carbonate (DEC), the electrolyte was removed, and then the graphite anode was dried at a reduced pressure at 50°C. The anode mixture layer was peeled off from the graphite anode, and the amount of iron contained in the anode mixture layer was analyzed using an ICP optical emission spectrometer.

Table 1

| | Amount of carbon in cathode material [% by mass] | Crystallite diameter of cathode active material [nm] | Amount of carbon/ crystallite diameter [% by mass/nm] | Peak intensity ratio $(I_D/I_G)$ [-] | Specific surface area $[m^2/g]$ | Powder resistance $[\Omega \cdot cm]$ | Cumulative particle size distribution $[\mu m]$ | | Direct current resistance $[\Omega]$ | | Cycle characteristics (capacity retention) [%] | Elution amount of iron [ppm] |
|---|---|---|---|---|---|---|---|---|---|---|---|---|
| | | | | | | | D10 | D90 | Input DCR | Output DCR | | |
| Example 1 | 1.1 | 78.7 | 0.0140 | 0.92 | 15.5 | 675 | 2.2 | 11.0 | 5.2 | 4.7 | 67 | 720 |
| Example 2 | 1.7 | 70.6 | 0.0241 | 0.89 | 16.7 | 69 | 2.7 | 12.2 | 5.4 | 5.2 | 70 | 540 |
| Example 3 | 2.3 | 64.2 | 0.0358 | 0.87 | 17.6 | 31 | 2.0 | 12.9 | 5.6 | 5.4 | 72 | 430 |
| Example 4 | 0.8 | 84.6 | 0.0095 | 0.92 | 13.3 | 9220 | 2.4 | 13.1 | 4.9 | 5.1 | 66 | 850 |
| Example 5 | 0.8 | 95.4 | 0.0084 | 1.10 | 12.9 | 508 | 2.3 | 11.4 | 4.8 | 4.6 | 64 | 970 |
| Example 6 | 1.5 | 91.7 | 0.0164 | 1.09 | 19.4 | 30 | 2.7 | 12.5 | 5.1 | 4.7 | 65 | 810 |
| Example 7 | 2.0 | 84.3 | 0.0237 | 1.02 | 22.4 | 10 | 2.8 | 12.8 | 5.4 | 5.0 | 69 | 650 |
| Comparative Example 1 | 0.4 | 87.8 | 0.0046 | 0.82 | 9.1 | 762100 | 1.8 | 10.9 | 4.9 | 5.2 | 49 | 2440 |
| Comparative Example 2 | 0.6 | 100.8 | 0.0060 | 1.17 | 10.6 | 6672 | 2.4 | 13.0 | 5.8 | 6.2 | 54 | 2290 |
| Comparative Example 3 | 0.9 | 126.5 | 0.0071 | 0.91 | 9.2 | 45 | 1.9 | 11.3 | 7.2 | 5.5 | 55 | 1900 |
| Comparative Example 4 | 0.8 | 143.1 | 0.0056 | 1.12 | 7.4 | 15 | 1.8 | 10.9 | 8.4 | 6.0 | 53 | 2200 |

It is found that, in all of the lithium ion secondary batteries in which the cathode materials for a lithium ion secondary battery of Examples 1 to 7 in which the amount of carbon per crystallite diameter satisfied the range of 0.008% by mass/nm or more and 0.050% by mass/nm or less and the peak intensity ratio ($I_D/I_G$) between the D band and the G band in the Raman spectrum obtained by Raman spectrometry satisfied the range of 0.85 or more and 1.15 or less, the elution amounts of iron were decreased, the direct current resistance values were low, and the capacity retentions were high.

**Claims**

1. A cathode material for a lithium ion secondary battery comprising:

    agglomerated particles formed by agglomeration of a plurality of primary particles of a cathode active material represented by General Formula (1) which are coated with a carbonaceous film,
    wherein an amount of carbon per a crystallite diameter of the cathode active material is 0.008% by mass/nm or more and 0.050% by mass/nm or less, and a peak intensity ratio ($I_D/I_G$) between a D band and a G band in a Raman spectrum obtained by Raman spectrometry is 0.85 or more and 1.15 or less;
    wherein a particle diameter (D10) at a cumulative percentage of 10% in a cumulative particle size distribution of the cathode material is 1 $\mu$m or more and 5 $\mu$m or less, and a particle diameter (D90) at a cumulative percentage of 90% is 15 $\mu$m or less.

    $$Li_x A_y D_z PO_4 \qquad (1)$$

    wherein A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, $0.9<x<1.1$, $0<y\leq1$, $0\leq z<1$, and $0.9<y+z<1.1$.

2. The cathode material for a lithium ion secondary battery according to Claim 1,
    wherein the crystallite diameter of the cathode active material is 60 nm or more and 100 nm or less.

3. The cathode material for a lithium ion secondary battery according to Claim 1 or 2,
    wherein the amount of carbon in the cathode material is 0.5% by mass or more and 3.0% by mass or less, and a powder resistance is 10,000 $\Omega\cdot$cm or less.

4. The cathode material for a lithium ion secondary battery according to any of Claims 1 to 3,
    wherein a specific surface area of the cathode material is 12 m$^2$/g or more and 30 m$^2$/g or less.

5. An electrode for a lithium ion secondary battery comprising:

    an aluminum current collector; and
    a cathode mixture layer formed on the aluminum current collector,
    wherein the cathode mixture layer contains the cathode material for a lithium ion secondary battery according to any of Claims 1 to 4.

6. A lithium ion secondary battery comprising:

    a cathode;
    an anode; and
    an electrolyte,
    wherein the cathode is the electrode for a lithium ion secondary battery according to Claim 5.

**Patentansprüche**

1. Kathodenmaterial für eine Lithium-Ionen-Sekundärbatterie, umfassend:

    agglomerierte Teilchen, die durch Agglomeration einer Mehrzahl von Primärteilchen eines aktiven Kathodenmaterials, dargestellt durch die allgemeine Formel (1), gebildet sind, welche mit einem kohlenstoffhaltigen Film beschichtet sind,

wobei eine Menge an Kohlenstoff pro Kristallit-Durchmesser des aktiven Kathodenmaterials 0,008 Massen-%/nm oder mehr und 0,050 Massen-%/nm oder weniger beträgt und ein Peak-Intensitätsverhältnis ($I_D/I_G$) zwischen einer D-Bande und einer G-Bande in einem durch Raman-Spektrometrie erhaltenen Raman-Spektrum 0,85 oder mehr und 1,15 oder weniger beträgt;

wobei ein Teilchendurchmesser (D10) bei einem kumulativen Prozentsatz von 10% in einer kumulativen Teilchengrößenverteilung des Kathodenmaterials 1 μm oder mehr und 5 μm oder weniger beträgt und ein Teilchendurchmesser (D90) bei einem kumulativen Prozentsatz von 90% 15 μm oder weniger beträgt.

$$Li_xAyD_zPO_4 \qquad (1)$$

wobei A mindestens ein Element, ausgewählt aus der Gruppe, bestehend aus Co, Mn, Ni, Fe, Cu und Cr, darstellt, D mindestens ein Element, ausgewählt aus der Gruppe, bestehend aus Mg, Ca, Sr, Ba, Ti, Zn, B, Al, Ga, In, Si, Ge, Sc und Y, darstellt, 0,9<x<1,1, 0<y≤1, 0≤z<1 und 0,9<y+z<1,1.

2. Kathodenmaterial für eine Lithium-Ionen-Sekundärbatterie nach Anspruch 1,
wobei der Kristallit-Durchmesser des aktiven Kathodenmaterials 60 nm oder mehr und 100 nm oder weniger beträgt.

3. Kathodenmaterial für eine Lithium-Ionen-Sekundärbatterie nach Anspruch 1 oder 2,
wobei die Menge an Kohlenstoff in dem Kathodenmaterial 0,5 Massen-% oder mehr und 3,0 Massen-% oder weniger beträgt und ein Pulverwiderstand 10.000 Ω·cm oder weniger beträgt.

4. Kathodenmaterial für eine Lithium-Ionen-Sekundärbatterie nach einem der Ansprüche 1 bis 3,
wobei eine spezifische Oberfläche des Kathodenmaterials 12 m²/g oder mehr und 30 m²/g oder weniger beträgt.

5. Elektrode für eine Lithium-Ionen-Sekundärbatterie, umfassend:

einen Aluminium-Stromabnehmer; und
eine Kathoden-Gemisch-Schicht, die auf dem Aluminium-Stromabnehmer ausgebildet ist,
wobei die Kathoden-Gemisch-Schicht das Kathodenmaterial für eine Lithium-Ionen-Sekundärbatterie nach einem der Ansprüche 1 bis 4 enthält.

6. Lithium-Ionen-Sekundärbatterie, umfassend:

eine Kathode;
eine Anode; und
einen Elektrolyten,
wobei die Kathode die Elektrode für eine Lithium-Ionen-Sekundärbatterie nach Anspruch 5 ist.

**Revendications**

1. Matériau de cathode pour batterie secondaire aux ions lithium comprenant:

des agglomérats de particules formés par agglomération d'une pluralité de particules primaires d'un matériau actif de cathode représenté par la formule générale (1), lesquelles sont enrobées d'un film carboné,
dans lequel la quantité de carbone par diamètre de cristallite du matériau actif de cathode est de 0,008% en masse/nm ou plus et de 0,050% en masse/nm ou moins, et un taux d'intensité de crête ($I_D/I_G$) entre une bande D et une bande G dans un spectre de Raman obtenu par spectrométrie de Raman, est de 0,85 ou plus et de 1,15 ou moins;
dans lequel un diamètre particulaire (D10) à un pourcent cumulatif de 10% dans une distribution granulométrique du matériau de cathode est de 1 μm ou plus et de 5 μm ou moins, et un diamètre particulaire (D90) à un pourcent cumulatif de 90%, est de 15 μm ou moins,

$$Li_xAyD_zPO_4 \qquad (1)$$

dans laquelle
A représente au moins un élément sélectionné parmi le groupe consistant en Co, Mn, Ni, Fe, Cu et Cr, D représente au moins un élément sélectionné parmi le groupe consistant en Mg, Ca, Sr, Ba, Ti, Zn, B, Al, Ga, In, Si, Ge, Sc et Y, $0{,}9<x<1{,}1$, $0<y\leq1$, $0\leq z<1$ et $0{,}9<y+z<1{,}1$.

2. Matériau de cathode pour batterie secondaire aux ions lithium selon la revendication 1, dans lequel le diamètre de cristallite du matériau actif de cathode est de 60 nm ou plus et de 100 nm ou moins.

3. Matériau de cathode pour batterie secondaire aux ions lithium selon la revendication 1 ou 2, dans lequel la quantité de carbone dans le matériau de cathode est de 0,5% en masse ou plus et de 3,0% en masse ou moins et la résistance de la poudre est de 10.000 $\Omega\cdot$cm ou moins.

4. Matériau de cathode pour batterie secondaire aux ions lithium selon l'une quelconque des revendications 1 à 3, dans lequel une aire de surface spécifique du matériau de cathode est de 12 $m^2$/g ou plus et de 30 $m^2$/g ou moins.

5. Électrode pour batterie secondaire aux ions lithium comprenant:

   un collecteur de courant en aluminium; et
   une couche de mélange cathodique formée sur le collecteur de courant en aluminium,
   dans laquelle la couche de mélange cathodique contient le matériau de cathode pour batterie secondaire aux ions lithium selon l'une quelconque des revendications 1 à 4.

6. Batterie secondaire aux ions lithium, comprenant:

   une cathode;
   une anode et
   un électrolyte,
   dans laquelle la cathode est l'électrode pour batterie secondaire aux ions lithium selon la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016062644 A
- JP 2015037012 A
- WO 2013024621 A
- WO 2013176067 A1
- JP 2018032567 A
- US 2018062165 A1
- US 2012301780 A1
- EP 3301741 A1
- EP 3291343 A1
- JP 2013069566 A